Europäisches Patentamt

**European Patent Office**

**Office européen des brevets**

(11) Publication number: **0 124 771**

**A1**

(12) **EUROPEAN PATENT APPLICATION**

(21) Application number: **84103730.2**

(22) Date of filing: **04.04.84**

(51) Int. Cl.³: **F 16 H 57/04**

(30) Priority: **04.05.83 JP 78623/83**

(43) Date of publication of application:
**14.11.84 Bulletin 84/46**

(84) Designated Contracting States:
**DE FR GB**

(71) Applicant: **NISSAN MOTOR COMPANY, LIMITED**
**No.2, Takara-cho, Kanagawa-ku**
**Yokohama-shi Kanagawa-ken 221(JP)**

(72) Inventor: **Uchiyama, Hirao**
**No. 4-29-9, Tan-machi Kanagawa-ku**
**Yokohama City(JP)**

(74) Representative: **Patentanwälte Grünecker, Dr.**
**Kinkeldey, Dr. Stockmair, Dr. Schumann, Jakob, Dr.**
**Bezold, Meister, Hilgers, Dr. Meyer-Plath**
**Maximilianstrasse 58**
**D-8000 München 22(DE)**

(54) Automatic transmission.

㊐ An automatic transmission comprises a control valve
assembly (12) provided on an upper portion of a housing (11),
a side gear chamber (14) to receive a working oil discharged
from the control valve assembly (12), and an oil reservoir
chamber (15) communicating with the side gear chamber (14)
via a connecting hole. A one-way valve (22) is provided in the
connecting hole (17) to prevent a reverse flow of oil from the
oil reservoir chamber (15) to the side gear chamber (14).

FIG.2

EP 0 124 771 A1

PATENTANWÄLTE

DR.ING. K. KINKELEY DR. STOCKMAIR
DR SCHUMANN JAKOB DR BEZOLD MEISTER
HILGERS DR MEYER-PLATH
MAXIMILIANSTR. 58 · 8000 MÜNCHEN 22

# AUTOMATIC TRANSMISSION

## BACKGROUND OF THE INVENTION

The present invention relates to an automatic transmission.

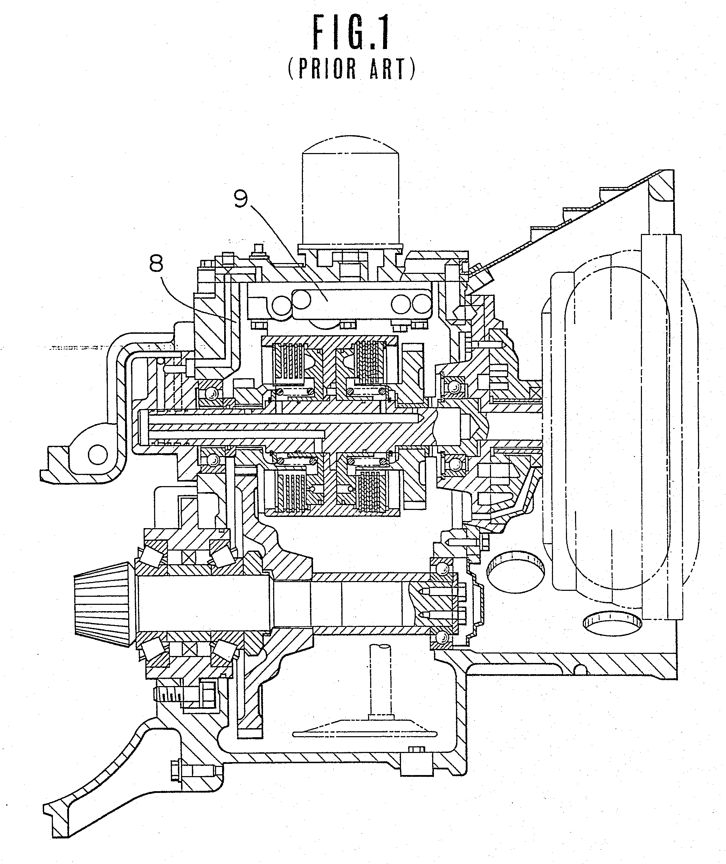

Automatic transmissions are known which have a control valve assembly provided on an upper portion of a transmission housing. Mounting the control valve assembly on the upper portion of the housing is advantageous for ease of installation and operation. Such automatic transmissions are used in industrical vehicles. One such automatic transmission is known from Nissan Fork Lift Periodical No. 373, page 84, issued October 1978 by Nissan Motor Company Limited and shown in Fig. 1.

## SUMMARY OF THE INVENTION

A general object of the present invention is to adapt the automatic transmission of the above kind to a passenger car.

In adapting the automatic transmission of the above kind to a passenger car, a working oil may be discharged from the control valve assembly to drop into a side gear chamber wherein a side gear is rotatably mounted and then to an oil reservoir chamber via a suitable hole connecting the side gear chamber with the oil reservoir. The working oil within the oil reservoir is sucked in by an oil pump via a suction port opening into the working oil within the oil reservoir to be supplied to the control valve assembly again.

This oil flow arrangement, however, is not satisfactory in that the working oil flows back to the side gear chamber from the oil reservoir chamber when the automatic transmission tilts as the vehicle turns while running. The working oil having flown into the side gear chamber is splashed upward by the rotation of the side gear, thus augumenting the amount of inflow of the working oil to the side gear chamber from the oil reservoir chamber. If the working oil keep flowing into the side gear chamber out of the oil reservoir chamber in this manner, a problem arises that the oil level within the oil reservoir chamber drops below the suction port level and the suction port draws in air. The opening area of the connecting hole is so designed as to avoid the above problem and thus not sufficiently wide enough to assure a swift flow of the working oil from the side gear chamber into the oil reservoir chamber at low temperatures when the oil viscosity is high, thereby to create a problem that a drop in the oil level takes place and the suction port draws in air at low temperature operating range.

According to the present invention, an automatic transmission is provided wherein a working oil discharged from a control valve assembly that is provided on an upper portion of a transmission housing is admitted to a side gear chamber and then to an oil reservoir chamber via a conneting hole provided with a one-way valve which prevents a flow of oil from the oil reservoir chamber to the side gear chamber.

Accordingly, a specific object of the present invention is to provide an automatic transmission having a control valve assembly provided on an upper portion of a transmission housing wherein the oil level of the working oil is always maintained high so that a suction port opening into the oil reservoir chamber is prevented from drawing in air.

BRIEF DESCRIPTION OF THE DRAWINGS

Fig. 1 is a longitudinal sectional view of the above described known automatic transmission for a fork lift;

Fig. 2 is a side elevational view partly sectioned to illustrate an automatic transmission embodying the present invention;

Fig. 3(a) is a front elevational view of a one-way valve used in Fig. 3;

Fig. 3(b) is a side elevational view of the one-way valve shown in Fig. 4(a) as viewed from the lefthand side thereof; and

Fig. 4 is a front elevational view of a valve supporting member used in the one-way valve shown in Fig. 3(a).

DETAILED DESCRIPTION OF THE INVENTION

Before entering into the description of an embodiment according to the present invention, a description is made briefly as to the automatic transmission shown in Fig. 1

Fig. 1 shows the automatic transmission for a fork lift which is known from Nissan Fork Lift Periodical No. 373, page 84, issued October 1978 by Nissan Motor Company Limited. In this Figure, the reference numeral 9 denotes a control valve assembly provided on an upper portion of a transmission housing 8.

Hereinafter, the embodiment according to the present invention is described along with the accompanying drawings.

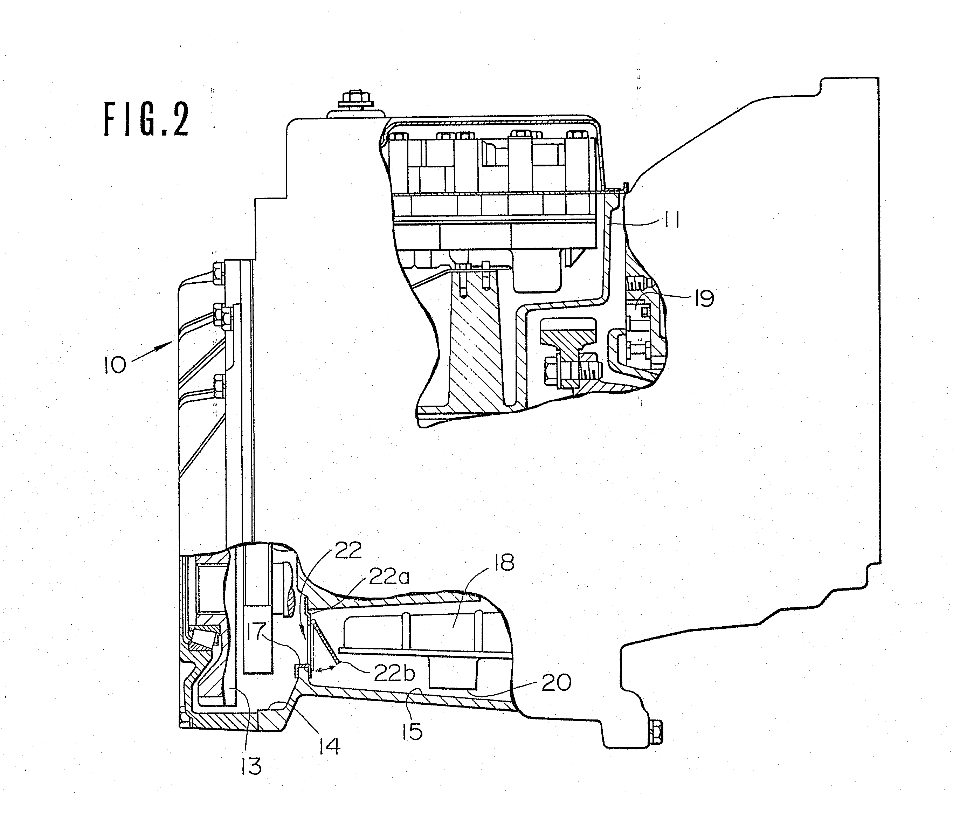

Referring to Fig. 2, the reference numeral 10 denotes an automatic transmission, and the reference numeral 11 a transmission housing thereof. Provided on an upper portion of the housing 11 is a control valve assembly 12. There is arranged in a left portion, as viewed in Fig. 2, of the housing 11 a side gear 13 which delivers rotation of an output shaft of the automatic transmission to a differential gear, not illustrated. The housing 11 has wall means surrounding the side gear 13 and defining a side gear chamber 14, and an oil reservoir chamber 15 is defined in the lower portion of the housing 11 which stores the working oil. The side gear chamber 14 and the oil reservoir chamber 15 are disposed adjacent to each other and communicate with each other via a connecting hole 17. Provided in the connecting hole 17 is a one-way valve 22.

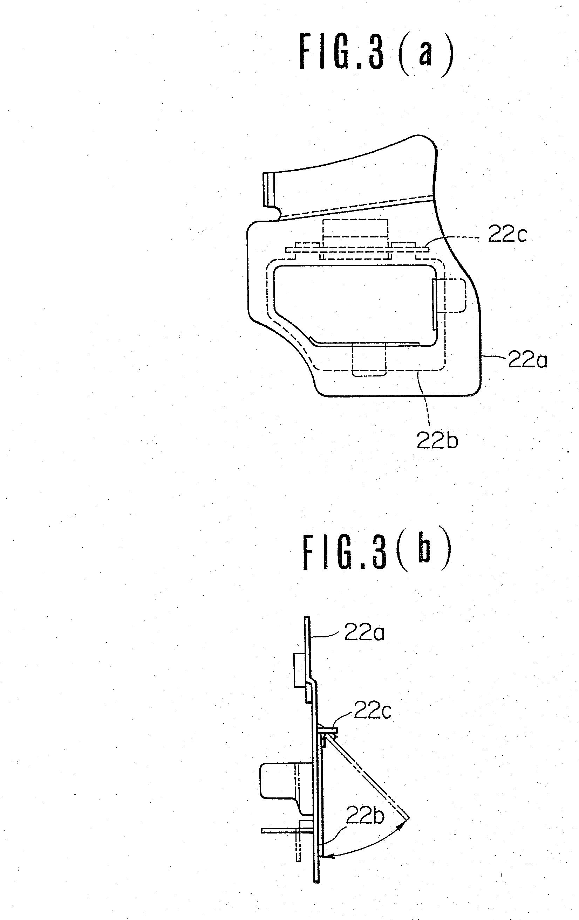

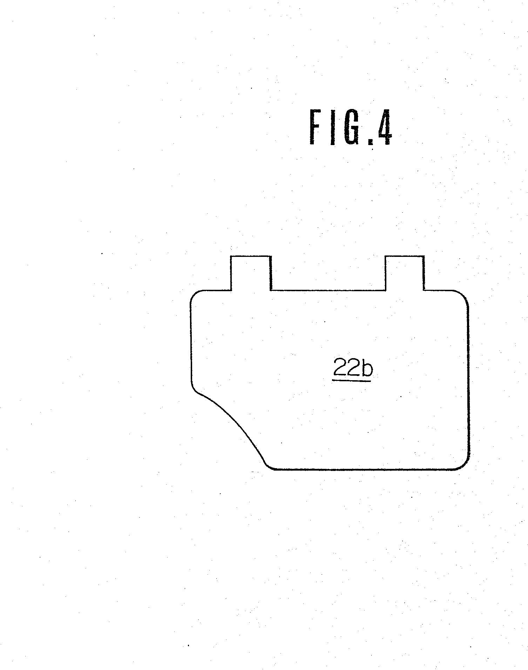

Referring to Figs. 3(a), 3(b) and 4, the one-way valve 22 comprises a valve supporting member 22a with an opening as best seen in Figs. 3(a) fixedly mounted in the connecting hole 17. A valve plate 22b is best seen in Fig. 4. The valve plate 22b has an area larger than the opening area of the supporting member 22a and is rotatably attached to the supporting member 22a via a pin 22c. As shown in Fig. 2, the valve plate 22b swings toward the oil reservoir chamber 15 to allow a flow from the side gear chamber 14 to the oil reservoir chamber 15, but it is prevented from swinging toward the side gear chamber 14 to prevent a reverse flow to the side gear chamber 14 from the oil reservoir chamber 15. Within the lower portions of the oil resevoir chamber 15 and the side gear chamber 14, the working oil gathers. Disposed within the oil reservoir chamber 15 is an oil strainer 18 connected to an oil pump 19 and formed with a suction port 20 opening into the working oil. The oil pump 19 is connected to the control valve assembly 12 such that operating the oil pump 19 will allow the suction port 20 to suck in the working oil to be delivered upwardly to the control valve assembly 12.

The operation is described. In the automatic transmission shown in Fig. 2, the control valve assembly 12 discharges the working oil after its use and this discharged oil flows into the side gear chamber 14 having accommodated therein the side gear 13. If the oil level of the working oil having flown into the side gear chamber 14 becomes higher than the oil level in the oil reservoir chamber 15, the working oil opens by its own weight the valve plate 22b of the one-way valve 22 to flow into the oil reservoir chamber 15. Thus, the flow of oil from the side gear chamber 14 to the oil reservoir chamber 15, i.e, a return flow, is assured even when the oil viscosity becomes high at low temperatures, thus preventing the suction port 20 from drawing in air. After being sucked in via the suction port 20, the working oil within the oil reservoir chamber 15 is supplied again to the control valve assembly 12. When the housing 11 tilts or is inclined counterclockwise as viewed in Fig. 2 as the vehicle turns while running, the working oil in the oil reservoir chamber 15 tends to flow into the side gear chamber 14, but such flow into the side gear chamber 14 is prevented because the valve plate 22b is closed by being pressed by the working oil. Therefore, even if the working oil in the side gear chamber 14 is splashed upwards by the side gear 13, the working oil will not flow into the side gear chamber 14 from the oil reservoir chamber 15.

Therefore, the oil level of the working oil in the oil reservoir chamber 15 is prevented from dropping below the suction port 20, thus preventing the suction port 20 from drawing in air.

WHAT IS CLAIMED IS:

1. An automatic transmission for a vehicle, comprising:

a housing having an upper portion;

a control valve assembly provided on the upper portion of said housing;

a side gear chamber having a side gear therein, said side gear chamber communicating with said control valve assembly to receive a working oil discharged from said control valve assembly;

an oil reservoir chamber communicating with said side gear chamber via a connecting hole;

an oil pump having a suction port opening into said oil reservoir chamber; and

a one-way valve provided in said connecting hole to prevent a flow of the working oil from said oil reservoir chamber to said side gear chamber.

2. An automatic transmission as claimed in claim 1, wherein said one-way valve includes a valve supporting member fixedly mounted in said connecting hole and formed with an opening, a valve plate rotatably attached to said valve supporting plate and swingable from a closed position wherein said opening is closed to an open position wherein said opening is opened.

# FIG.1
## (PRIOR ART)

FIG.2

# FIG.3 (a)

22c

22a

22b

# FIG.3 (b)

22a

22c

22b

# FIG.4

_22b_

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | DE - A1 - 3 021 162 (NISSAN) <br> * Totality * | | F 16 H 57/04 |
| A | GB - A - 2 037 381 (GENERAL MOTORS) <br> * Totality * | | |
| A | SOVIET INVENTIONS ILLUSTRATED, section P,Q; 2nd week 1982, February 24, 1982 <br> DERWENT PUBLICATIONS LTD, London Q 64 <br> * SU-817 368 (DOVNAROK) * | | |
| A | DE - C - 859 551 (EDLER & SOHN) <br> * Totality * | | |
| A | GB - A - 708 099 (AIR-EQUIPMENT) <br> * Totality * | | |
| A | US - A - 1 220 811 (ALQUIST) <br> * Totality * | | |

TECHNICAL FIELDS SEARCHED (Int. Cl. ³)

F 16 H 5/00
F 16 H 57/00

The present search report has been drawn up for all claims

| Place of search | Date of completion of the search | Examiner |
|---|---|---|
| VIENNA | 10-07-1984 | SCHATEK |